**Europäisches Patentamt**

**European Patent Office**

**Office européen des brevets**

(11) Publication number: **0 126 118**
**B1**

## EUROPEAN PATENT SPECIFICATION

(45) Date of publication of patent specification: **15.03.89**

(51) Int. Cl.⁴: **B 29 C 49/04,** B 29 L 23/00

(21) Application number: **83903624.1**

(22) Date of filing: **15.11.83**

(86) International application number:
**PCT/SE83/00398**

(87) International publication number:
**WO 84/01920 24.05.84 Gazette 84/13**

(54) **METHOD FOR ORIENTATION OF THE MATERIAL OF PLASTIC TUBES.**

(30) Priority: **15.11.82 SE 8206483**

(43) Date of publication of application:
**28.11.84 Bulletin 84/48**

(45) Publication of the grant of the patent:
**15.03.89 Bulletin 89/11**

(84) Designated Contracting States:
**BE DE FR GB NL**

(56) References cited:
**DE-A-2 051 390**
**DE-A-2 200 964**
**DE-A-2 719 308**
**DE-C- 675 525**
**US-A-2 716 777**
**US-A-2 936 491**
**US-A-3 201 503**
**US-A-3 296 344**

(73) Proprietor: **UPONOR AB**
**Postbox 1 Industrivägen**
**S-513 00 Fristad (SE)**

(72) Inventor: **AGREN, Lennart**
**Lyckogangen 6**
**S-502 49 Boras (SE)**

(74) Representative: **Ström, Tore et al**
**Ström & Gulliksson AB Studentgatan 1 P.O. Box
4188**
**S-203 13 Malmö (SE)**

## Description

This invention relates to a method for the orientation of the material of an extruded polyethylene tube, wherein the polyethylene tube is being tempered by passing the polyethylene tube through a tempering zone in a heated jacket tube, the polyethylene material of the tube being cross-linked before or during the tempering and the polyethylene tube thus tempered is expanded against the inside surface of the jacket tube in a portion thereof by applying positive pressure in the polyethylene tube.

US—A—3,296,344 which forms the basis for the first portion of the single claim, relates to a method of this type for expanding plastic tubing such as cross-linked polyethylene tubing. The tubing is passed through a forming tube, wherein the tubing is first cooled, then heated and expanded under internal pressure, and finally is cooled again. The tubing which is stored on a drum, is supplied to the forming tube therefrom and is pulled through said tube by means of a pulling tape wrapped about the tubing.

Also DE—A—675,525 relates to a method of expanding a plastic tube. The tube comes from an extruder and is pressed against the inside surface of a jacket tube flaring in the moving direction of the plastic tube. The purpose of this measure is to provide a stretching of the plastic tube so as to reduce the brittleness thereof. However, the jacket tube is cooled by means of a cooling element, no heating whatsoever being involved in the processing of the plastic tube in the jacket tube.

By effecting orientation of the plastic material of a tube, the tube will be stronger and can stand a higher burst pressure, but the method of orientation of the tube to the extent it is applied on the whole, is an expensive and troublesome process.

The object of the invention is to provide orientation of the material of polyethylene tubes by a method which can easily be included in the production line without causing increased production time. The method disclosed in US—A—3,296,344 neither is proposed nor is suitable for orientation of polyethylene tubes in immediate connection with the extrusion thereof, because the plastic tubing according to said document is cooled prior by its introduction in the forming tube, to prevent premature expansion.

For the purpose mentioned the method of the invention has obtained the characteristics of the claim.

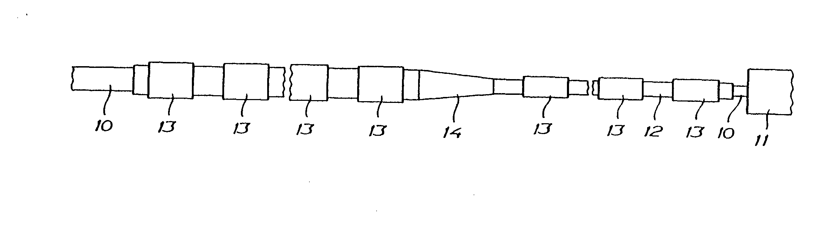

In order to explain the invention in more detail reference is made to the accompanying drawing which discloses diagrammatically an equipment for working the method of the invention for cross-linking and orientation of polyethylene.

A polyethylene tube 10 is extruded from an extruder 11 and from the extruder is passed into a jacket tube 12 of steel which is kept at a uniform temperature of 130 to 300°C, preferably at about 250°C, e.g. by heating by means of external heaters 13. The polyethylene the temperature of which may be higher than the temperature maintained in the tube 12, when the polyethylene tube leaves the extruder, will be tempered in the tube 12. If the polyethylene has not said higher temperature, the polyethylene will be heated in the steel tube. Inside the steel tube 12 the polyethylene tube is held under an internal positive pressure of 0.1—25 bar by means of a fluid supplied, preferably an inert gas, e.g. nitrogen. In order that the polyethylene tube will slide unobstructedly through the steel tube a lubricant, preferably with high or relatively high viscosity (>400 cSt at 20°C) can be supplied between the surfaces sliding against each other.

In an initial stage, the plastic tube will be cross-linked and after the distance required for the cross-linking, the steel tube changes at a conical portion 14 into a wider portion wherein the cross-linked tube will be expanded under the action of the internal positive pressure to engage the inner side of the wider portion of the steel tube such that the plastic material will be exposed to orientation.

Thus, it will be seen that the polyethylene tube immediately after the extrusion will be exposed to continuous cross-linking and orientation while being calibrated at the same time when moving through the steel tube 12 substantially at the velocity at which the tube is being extruded. The final product is an orientated PEX tube which has improved strength properties and is calibrated and moreover presents a regular cylindrical form.

The polyethylene tube supplied to the initial portion of the steel tube 12 can be cross-linked already, e.g. by radiation. The only purpose of the heating and expansion in the steel tube in that case is to effect the desired orientation of the cross-linked polyethylene material of the tube.

## Claim

A method for the orientation of the material of an extruded polyethylene tube wherein the polyethylene tube is being tempered by passing the polyethylene tube through a tempering zone in a heated jacket tube the polyethylene material of the tube being cross-linked before or during the tempering and the polyethylene tube thus tempered is expanded against the inside surface of the jacket tube is a portion thereof by applying positive pressure in the polyethylene tube, characterized in that the tempering step is effected immediately after the extrusion, the outside surface of the polyethylene tube directly contacting the inside surface of the jacket tube along all of the jacket tube's length and the jacket tube being maintained at such temperature in the tempering zone that the temperature of the polyethylene tube is increased to a value between 130° and 300°C, and that the tempered polyethylene tube is subsequently orientated during said expansion by flaring the polyethylene tube in the moving direction thereof in a conical portion of the jacket tube positioned immediately downstream from the tempering zone.

**Patentanspruch**

Verfahren zur Orientierung eines Materials aus einem extrudierten Polyethylenschlauch, bei dem der Polyethylenschlauch getempert wird, indem der Polyethylenschlauch durch eine Temperierzone in einem erwärmten Mantelrohr geleitet wird, wobei das Polyethylenmaterial dieses Schlauchs vor oder während des Temperns vernetzt wird und der so getemperte Polyethylenschlauch durch Anwendung von Überdruck im Polyethylenschlauch in einem Abschnitt gegen die Innenoberfläche des Mantelrohrs gebläht wird, dadurch gekennzeichnet, dass der Temperierungsschritt unmittelbar nach der Extrusion durchgeführt wird, die Aussenoberfläche des Polyethylenschlauchs die Innenoberfläche des Mantelrohrs entlang der gesamten Länge des Mantelrohrs direkt berührt und das Mantelrohr in der Temperierungszone bei einer solchen Temperatur gehalten wird, dass die Temperatur des Polyethylenschlauchs auf einen Wert zwischen 130° und 300°C erhöht wird, und dass der getemperte Polyethylenschlauch anschliessend während des Blähens orientiert wird, indem der Polyethylenschlauch in seiner Bewegungsrichtung im konischen Abschnitt des Mantelrohrs, der unmittelbar stromabwärts von der Temperierzone angeordnet ist, ausgeweitet wird.

**Revendication**

Procédé pour orienter la matière d'un tube de polyéthylène extrudé, dans lequel le tube de polyéthylène est amené à température en le faisant passer à travers une zone de mise à température dans un tube enveloppe chauffé, le polyéthylène du tube étant réticulé avant ou pendant la mise à température et le tube de polyéthylène ainsi amené en température est dilaté contre la surface intérieure du tube enveloppe dans une portion de celui-ci en exerçant une pression positive dans le tube de polyéthylène, caractérisé en ce que le stade de mise à température est effectué immédiatement après l'extrusion, la surface extérieure du tube de polyéthylène étant en contact direct avec la surface intérieure du tube enveloppe sur toute la longueur du tube enveloppe et celui-ci étant maintenu dans la zone de mise à température à une température telle que la température du tube de polyéthylène est augmentée à une valeur comprise entre 130 et 300°C, et en ce que le tube du polyéthylène ainsi amené à température est ultérieurement orienté pendant cette dilatation par l'évasement du tube de polyéthylène dans la direction du déplacement dans une partie conique du tube enveloppe disposée immédiatement en aval de la zone d'amenée en température.